# FASCICULE DE BREVET EUROPEEN

(11) **EP 1 095 663 B1**
(45) Date de publication et mention de la délivrance du brevet: **03.01.2007**
(21) Numéro de dépôt: 00402909.6
(22) Date de dépôt: 20.10.2000
(51) Int. Cl.: A61L 2/23, A01N 37/16

(54) **Composition désinfectante potentialisée et stabilisée ayant une activité bactéricide et virucide**
Potenziertes und stabilisiertes Desinfektionsmittel mit bakterizider und viruzider Wirkung
Potentiated and stabilised disinfectant having bactericidal and virucidal activity

(30) Priorité: 27.10.1999 FR 9913418
(43) Date de publication de la demande: 02.05.2001
(73) Titulaire: Sogeval S.A., 53022 Laval Cedex 9 (FR)
(72) Inventeur: Lucas, Frédéric, 53000 Laval (FR); Payan, Stephen, 53000 Laval (FR); Daoudal, José, 53000 Laval (FR)
(74) Mandataire: Cabinet HERRBURGER

(56) Documents cités:
- EP-A- 0 619 366
- DE-A- 3 615 787
- GB-A- 2 137 882
- US-A- 5 085 852

## Description

La présente invention concerne une composition désinfectante potentialisée et stabilisée en solution aqueuse et ayant une activité bactéricide et virucide marquée.

Cette composition est plus particulièrement destinée au domaine de la désinfection de bâtiments d'élevage ou de matériaux d'élevage, tels qu'à titre d'exemple des matériaux servant au transport d'animaux domestiques.

Les locaux servant à l'élevage d'animaux domestiques ainsi que les différents matériaux liés à cet élevage sont particulièrement exposés à des contaminations diverses et doivent donc être soigneusement désinfectés afin d'éviter la prolifération de pathologies dont les conséquences peuvent être très graves.

Dans le cas particulier de la désinfection des logements d'animaux domestiques, ce traitement doit impérativement être effectué rapidement, ce pendant les périodes dites de « vide sanitaire » qui séparent chaque lot d'animaux, et il est par suite nécessaire de pouvoir disposer de compositions désinfectantes de grande efficacité.

Il existe actuellement sur le marché de nombreuses compositions désinfectantes destinées à l'assainissement des locaux d'élevage industriel.

Parmi les compositions désinfectantes de ce type, qui se sont avérées les plus avantageuses, on peut mentionner celle décrite dans le document FR-2 622 397 qui contient en proportion pondérale entre 3 et 35 % de sels d'ammonium quaternaire, entre 1 et 20 % de dialdéhydes à chaîne droite, notamment de glutaraldéhyde, et entre 1 et 15 % d'alcools gras éthoxylés.

Cette composition s'est révélée à l'usage bactéricide dès une concentration d'emploi de 0,5 % (conformément à la norme NF T 72-171) et, en outre, facilement éliminable et sans danger pour la santé humaine.

Les qualités bactéricides des ammoniums quaternaires et du glutaraldéhyde sont en effet bien connues depuis longtemps.

Cette composition désinfectante présente toutefois l'inconvénient de n'être considérée comme virucide, (conformément à la norme NF-T 72-180), qu'à partir d'une dose d'emploi de 2 %, ce qui peut s'avérer insuffisant, en particulier dans le cadre de la lutte contre des pathologies à virus actuellement émergentes chez les animaux, notamment les volailles ou le porc, pour lesquelles il n'existe actuellement ni vaccin, ni réelle médication.

Il s'avère, par suite, souhaitable de pouvoir mettre à la disposition des professionnels de l'élevage une composition renfermant une molécule désinfectante ayant, à la fois, un spectre d'efficacité très large et des propriétés virucides améliorées par rapport aux molécules actives présentes dans la composition antérieure susmentionnée.

La présente invention a pour objet de proposer une telle composition désinfectante ayant une activité virucide particulièrement marquée.

La formulation d'une composition désinfectante à usage agricole repose essentiellement sur son efficacité ; les molécules désinfectantes présentes dans une telle composition doivent, bien entendu, être actives sur les familles de virus et de bactéries représentant les agents pathogènes fréquemment rencontrés dans les élevages et dans les conditions, parfois défavorables, pratiquées sur le terrain.

A cela s'ajoutent des contraintes liées à la galénique (présentation du produit, stabilité chimique, ...), à la toxicité vis-à-vis des utilisateurs, des animaux et de l'environnement ainsi qu'à la corrosivité envers les matériaux.

De plus, des contraintes économiques liées au coût de la désinfection en élevage contribuent à limiter le choix des substances actives.

Pour satisfaire à ces différents impératifs, on a eu l'idée, conformément à l'invention, de proposer une composition désinfectante potentialisée et stabilisée en solution aqueuse, constituée par un mélange soluble dans l'eau se présentant en particulier sous forme d'une poudre ou de comprimés, et renfermant en tant qu'agent actif, un agent oxydant constitué par des sels de magnésium d'acides percarboxyliques et, de préférence, par du monoperoxyphtalate de magnésium.

Le monoperoxyphtalate de magnésium, dont la molécule a été pour la première fois décrite dans le document EP-0 027 693, correspond à une poudre soluble en milieu aqueux, ce à raison de 80 g/l à 20°C, de formule suivante : 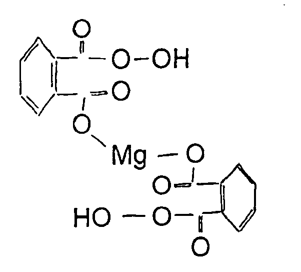 celui-ci se présente, en règle générale, sous forme hydratée, en particulier hexahydratée.

Le monoperoxyphtalate de magnésium est actuellement notamment utilisé en tant qu'agent de blanchiment (libérateur d'oxygène) en particulier pour le blanchiment des tissus.

L'utilisation du monoperoxyphtalate de magnésium en tant qu'agent désinfectant, notamment dans le domaine médical ou vétérinaire, a également été proposée conformément au document GB-2 137 882 : selon ce document, il est connu que le monoperoxyphtalate de magnésium présente une activité bactéricide, mais il n'y est pas fait allusion à des propriétés virucides ; de plus, les concentrations préconisées pour obtenir une activité bactéricide sont relativement élevées, à savoir au moins 400 ppm d'oxygène actif (Avox) soit 0,67 % de monoperoxyphtalate de magnésium et, de préférence, une quantité supérieure à 2 000 ppm, c'est-à-dire 3,33 % de monoperoxyphtalate de magnésium.

Conformément à l'invention, on a vérifié l'activité bactéricide du monoperoxyphtalate de magnésium vis-à-vis de souches bactériennes fréquentes dans les élevages, à savoir les souches suivantes : *Pseudomonas aeruginosa, Escherichia coli, Staphylococcus aureus et Enteroccocus hirae,* ce en appliquant les conditions expérimentales qui répondent aux exigences d'homologation d'un désinfectant à usage agricole qui sont définies par la norme NF-T 72-301 (temps de contact 5 min. température 20°C, conditions de saleté : eau dure à 30°f, matière organique = albumine 1 % + extraits de levures 1 %).

Il est à noter que conformément aux exigences en matière d'homologation (norme NF-T 72-171) une substance est considérée comme active à une concentration d'emploi donnée lorsqu'elle permet de réduire le titre bactérien d'au moins 10⁵, soit 5 Log.

L'évaluation de l'activité bactéricide du monoperoxyphtalate de magnésium sur les souches testées a donné les résultats rassemblés dans le tableau 1 ci-dessous

**Tableau 1**

| **Souches** | **Concentration active en monoperoxyphtalate de magnésium (réduction > 10⁵ Log)** | **Equivalence Avox** |
|---|---|---|
| *Pseudomonas aeruginosa (CIP A22)* | ≥ 5 000 ppm | ≥ 300 ppm |
| *Escherichia coli (CIP 53 154)* | ≥ 2 500 ppm | ≥ 150 ppm |
| *Staphylococcus aureus (CIP 53 154)* | ≥ 7 500 ppm | ≥ 450 ppm |
| *Enterococcus hirae (CIP 58 55)* | ≥ 5 000 ppm | ≥ 300 ppm |

On a ainsi pu déterminer que dans les conditions requises, le monoperoxyphtalate de magnésium s'est montré efficace sur les souches testées à une concentration de 7 500 ppm (soit 450 ppm d'oxygène libre).

Conformément à l'invention, on a également eu l'idée de vérifier si dans les conditions d'homologation susmentionnées, le monoperoxyphtalate de magnésium présentait également une activité virucide en particulier vis-à-vis de virus rencontrés en médecine vétérinaire. Selon les normes en vigueur, une substance est considérée comme virucide lorsqu'elle permet de réduire le titre viral d'au moins 10³, c'est-à-dire de 3 Log.

Ce test a été effectué sur le virus de la maladie de Talfan (enterovirus non enveloppé, à ARN). On a ainsi pu déterminer que, dans les conditions requises, le monoperoxyphtalate de magnésium présente une activité virucide à partir d'une concentration de 1 500 ppm.

On a, par ailleurs, vérifié que le monopéroxyphtalate de magnésium est non corrosif à température ambiante et à des concentrations de 1 000 à 10 000 ppm en présence de matières plastiques (Plexiglas®, polycarbonates, PVC, polyéthylène, polypropylène, linoléum, caoutchoucs synthétiques, ...) de céramiques (dalles en grès cérame ou en terre cuite, mortier au ciment, ...) ou encore de métaux (acier, fer galvanisé, aluminium, ...).

De plus, la faible toxicité et l'innocuité écologique du monoperoxyphtalate de magnésium sont mises en lumière par les données rassemblées dans le tableau 2 ci-dessous :

**Tableau 2**

| | | |
|---|---|---|
| **Toxicité aiguë par voie orale** | LD₅₀ (voie orale, rat) | 2300 MG/kg de poids vif |
| **Toxicité aiguë par voie dermique** | LD₅₀ (voie dermique, lapin) | 2000 mg/kg de poids vif |
| **Toxicité aiguë Par inhalation** | LD₅₀ (voie nasale, rat) | 0,84 mg/l |
| **Toxicité moyenne** | Effets toxiques (alimentation de rats de laboratoire pendant 90 jours) | > 620 mg/kg de poids vif |
| **Propriétés Mutagenes** | Non mutagène selon le test de AMES (norme n° ...) | |
| **Toxicité chez le poisson** | LC₅₀ (7 jours, truite arc en ciel) | 38,5 mg :l |
| **Biodégradabilité > 83 % (10-20 mg/l) selon le test de Sturm (norme n° OCDE 301 B)** | | |

Il est à noter que l'on a déjà proposé selon le document DE-A-3615787, une composition adaptée, le cas échéant, à la désinfection des étables renfermant en tant qu'agents actifs principaux, un donneur d'oxygène tel que le monoperoxyphtalate de magnésium et plusieurs donneurs d'acétyle et pouvant en outre éventuellement renfermer un sel d'acide minéral tel que l'hydrogèno ou le dihydrogèno phosphate de sodium ou de potassium ainsi que des agents tensioactifs.

On connaît également par le document US-A-5 085 852, une composition à usage oral adaptée au traitement des affections microbiennes de la cavité buccale chez l'homme ou l'animal et renfermant du monoperoxyphtalate de magnésium associé à un sel d'acide minéral et à un tensio actif anionique.

Conformément à l'invention, on a tenté d'exploiter les propriétés biocides de la molécule de monoperoxyphtalate de magnésium, vis-à-vis des bactéries mais aussi des virus en cherchant à potentialiser cette activité en lui associant d'autres agents chimiques. Ces additifs ont parallèlement été choisis de façon à maintenir, voire à améliorer la relative stabilité du monoperoxyphtalate de magnésium en solution aqueuse.

Il est en effet connu que le monoperoxyphtalate de magnésium n'est pas suffisamment stable pour être formulé en solution diluée ou concentrée.

En revanche, les dilutions d'emploi sont suffisamment stables pour couvrir le temps de la préparation et de l'utilisation.

On a ainsi pu formuler, conformément à l'invention, une composition désinfectante potentialisée et stabilisée en solution aqueuse et ayant une activité bactéricide et virucide marquée se présentant en particulier sous forme d'une poudre ou de comprimés de nature à satisfaire à tous les impératifs susmentionnés.

Selon l'invention, cette poudre est caractérisée en ce qu'elle renferme en proportion pondérale :
- 10 à 80 % d'un agent oxydant constitué par des sels de magnésium d'acides percarboxyliques et de préférence par du monoperoxyphtalate de magnésium,
- 5 à 30 % d'acide borique,
- 0,1 à 40 % d'au moins un agent tensioactif anionique, et
- le cas échéant, 30 % d'agents de stabilisation, et/ou jusqu'à 40 % d'auxiliaires de fabrication,
et en outre au moins un acide organique choisi dans le groupe formé par les acides malique, citrique, succinique, tartrique et sulfamique.

Les concentrations de la composition en ce ou ces acide(s) sont calculées afin que le pH de la solution aqueuse prête à l'emploi soit compris entre 2 et 5.

Le ou les agent(s) tensioactif(s) anionique(s) doi(ven)t être compatible(s) avec la molécule active et l'acide borique.

Selon l'invention, ce ou ces agent(s) tensioactif(s) anionique(s) peu(ven)t avantageusement être choisi(s) dans le groupe formé par :
- les alkylsulfates primaires, en particulier le lauryl sulfate de sodium,
- les alkylsulfonates primaires et secondaires,
- les alkylarylsulfonates, en particulier le dodécylbenzènesulfonate de sodium et le méthyléthylbenzènesulfonate de sodium, et
- les alkyldiphényloxydodisulfonates de sodium.

Pour obtenir une solubilisation optimale de cet ou ces agent(s) tensioactif(s) anionique(s) au sein de la solution prête à l'emploi, on met, de préférence, en oeuvre des composés ayant une chaîne alkyl comportant entre 8 et 22 atomes de carbone et notamment 12 et 16 atomes de carbone.

La fonction première de cet ou ces agent(s) tensioactif(s) anionique(s) est d'augmenter la miscibilité des matières organiques au sein de la solution prête à l'emploi et de favoriser le contact entre la matière active (monoperoxyphtalate de potassium) et les micro-organismes cibles.

De plus, l'incorporation d'agents tensioactifs à la composition permet d'effectuer des opérations de désinfection et de nettoyage en une seule étape, ce qui s'avère très avantageux en particulier lors du nettoyage de poulaillers ou autres locaux dans lesquels sont logés des animaux domestiques.

De plus, les modes d'utilisation dans le domaine vétérinaire nécessitent la préparation à l'avance d'une quantité de solution désinfectante suffisante pour le traitement d'un bâtiment complet, ce malgré la relative instabilité du monoperoxyphtalate de magnésium en solution aqueuse.

Or, l'ajout d'agents de stabilisation permet de prolonger l'activité du monoperoxyphtalate de magnésium et, par suite, de conférer à la solution prête à l'emploi une stabilité suffisante pour l'usage recherché.

Selon l'invention, on a pu établir que, de manière surprenante, la mise en oeuvre d'acide borique permet de parvenir à ce but suite à la formation d'un complexe retard libérateur d'oxygène actif de façon continue et prolongée, du type sel de peracide accepteur d'oxygène.

Il est à noter que l'on peut également ajouter à la composition conforme à l'invention 0,1 à 30 % en poids d'agents séquestrants aptes à complexer les sels métalliques présents dans l'eau qui sont réputés pour leur action inhibitrice et catalytique vis-à-vis des oxydants du type peroxyde.

Parmi les agents séquestrants pouvant être mis en oeuvre conformément à l'invention, on peut citer des phosphates alcalins (hexaméthaphosphate) tripolyphosphates, pyrophosphates, ou encore des phosphonates ou polyphosphonates.

Ces composés peuvent également jouer le rôle d'inhibiteurs de corrosion et favorisent par suite l'utilisation d'une formulation active pour le traitement de surfaces métalliques.

Par ailleurs, et conformément à une autre caractéristique de l'invention, la composition peut également avantageusement renfermer, en tant qu'auxiliaire de fabrication, au moins un agent tampon constitué par du sulfate et/ou du bisulfate de sodium.

Ces composés, non alcalins et qui ne réagissent pas avec les peroxydes, peuvent coopérer avec les autres composants de la composition pour permettre de maintenir le pH de la solution d'emploi finale entre 2 et 5.

Lorsque la composition se présente sous une forme compressée (comprimés, pastilles, granulés), il peut s'avérer en outre nécessaire de lui ajouter jusqu'à 5 % en poids de lubrifiants solubles du type laurylsulfate de sodium, acide borique, PEG 6 000, glycocol, ....

Selon une variante particulièrement avantageuse de l'invention, la composition peut se présenter sous la forme d'une poudre ou de comprimés effervescents, auquel cas, il est nécessaire d'y incorporer une source d'acide et une source de carbonate de façon à permettre l'émission de gaz carbonique lors de la dilution de la composition dans l'eau.

En tant que source d'acide, outre les constituants acides déjà présents dans la composition, on peut ajouter jusqu'à 20 % en poids d'acides spécifiques tels que des acides alimentaires (acide citrique, acide tartrique, acide malique, ...) ou encore des sels d'acides anhydres (hydrogénophosphate de sodium, dihydrogénopyrophosphate de sodium, hydrogénocitrate de sodium, ...).

En tant que source de carbonate, on peut mettre en oeuvre des carbonates ou bicarbonates de sodium ou de potassium, ou encore du complexe glycine-carbonate de sodium.

Une alternative intéressante consiste à utiliser les propriétés du perborate du sodium anhydre qui, en milieu acide, est naturellement effervescent.

La composition qui fait l'objet de l'invention peut, bien entendu, renfermer des additifs autres bien connu dans le domaine des poudres désinfectantes, tels que parfums, colorants, agents conservateurs, ce en quantités pouvant aller jusqu'à 10 % en poids, mais en règle générale d'environ 0,2 % en poids.

Selon une autre caractéristique de l'invention, la composition se présente sous la forme de comprimés renfermant, en proportions pondérales :
- 18 à 35 % de monoperoxyphtalate de magnésium,
- 20 à 37 % d'acide malique et/ou d'acide citrique,
- 2 à 15 % de cumène sulfonate de sodium,
- 12 à 25 % de bisulfate de sodium,
- 10 à 20 % de bicarbonate de sodium,
- 2 à 12 % d'acide borique, et
- 0,5 à 10 % de laurylsulfate de sodium.

Pour vérifier la stabilité dans le temps de comprimés correspondant à cette formulation, on a préparé les comprimés mentionnés, dans le tableau 3 ci-dessous :

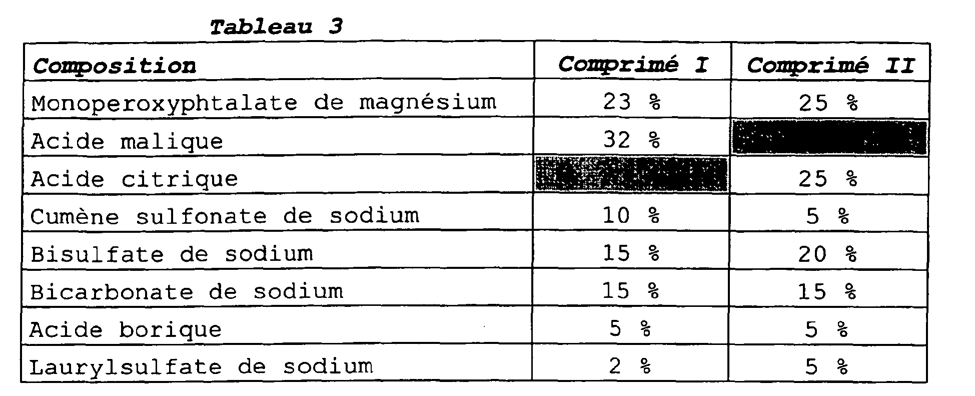

A partir de ces comprimés, on a préparé des solutions aqueuses à 5 g/l et à 10 g/l. Les pH de ces solutions sont mentionnées dans le tableau 4 ci-dessous :

**Tableau 4**

| ***pH des solutions aqueuses*** | ***Comprimé I*** | ***Comprimé II*** |
|---|---|---|
| 5 g/litre | 3,3 | 3,3 |
| 10 g/litre | 3,2 | 3,3 |

Parallèlement, on a mesuré la teneur de ces comprimés en monoperoxyphtalate de magnésium après un stockage à 20°C pendant un mois, trois mois et douze mois. Ces teneurs sont mentionnées sur le tableau 5 ci-dessous :

**Tableau 5**

| **Temps (mois)** | **Comprimé I** | **Comprimé II** |
|---|---|---|
| 1 | 23,1 | 24,03 |
| 3 | 22, 15 | 23,67 |
| 12 | 21,13 | 22,55 |

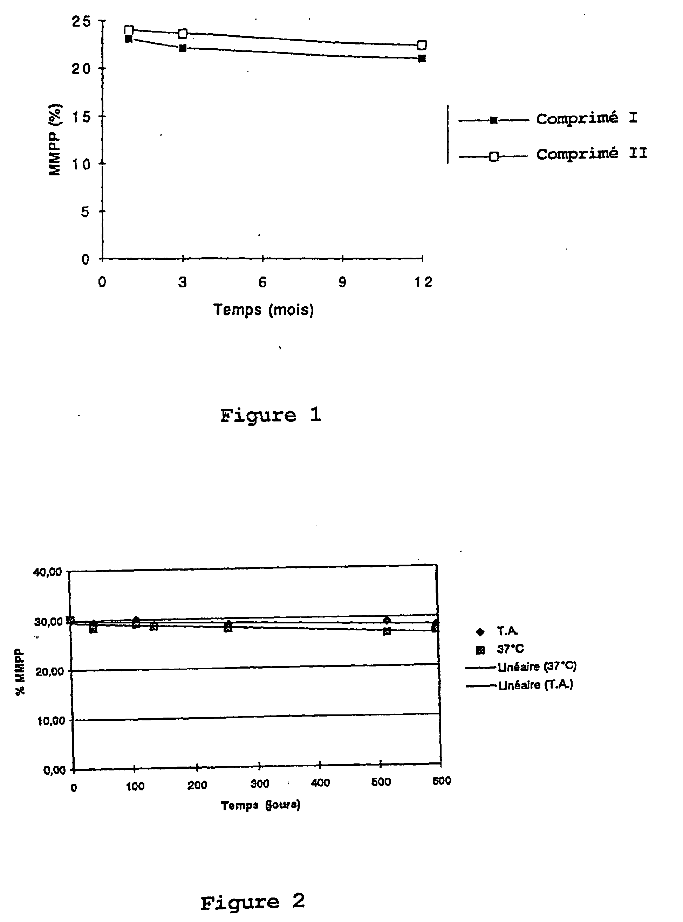

Les courbes représentant les variations de la teneur des comprimés I et II en monoperoxyphtalate de magnésium (MMPP) en fonction du temps sont représentées sur la figure 1.

Ces tests ont permis de constater que ces variations sont inférieures à 10 % après un stockage d'un an, ce qui prouve une stabilité satisfaisante.

Selon une autre caractéristique de l'invention, la composition se présente sous la forme d'une poudre renfermant en proportions pondérales :
- 18 à 35 % de monoperoxyphtalate de magnésium,
- 5 à 25 % de cumène sulfonate et/ou de dodécylbenzènesulfonate de sodium,
- 12 à 25 % d'acide borique,
- 10 à 18 % de bisulfate de sodium, et
- 18 à 35 % de sulfate de sodium anhydre.

Pour vérifier la stabilité dans le temps de la concentration en monoperoxyphtalate de magnésium de poudres correspondant à cette formulation, on a préparé la poudre I de composition suivante :
- monoperoxyphtalate de magnésium 30 %
- cumène sulfonate de sodium 15 %
- acide borique 15 %
- bisulfate de sodium 15 %
- sulfate de sodium anhydre 25 %.

On a ensuite mesuré la concentration de cette poudre en monoperoxyphtalate de magnésium après un stockage de longue durée d'une part, à température ambiante (T.A.) et, d'autre part, à 37°C.

Les résultats obtenus sont rassemblés dans le tableau 6 ci-dessous :

**Tableau 6**

| ***Jours*** | ***T.A.*** | ***37°C*** |
|---|---|---|
| 28 | 29,48 | 28,35 |
| 108 | 30,00 | 29,17 |
| 137 | 28,97 | 28,62 |
| 254 | 28,92 | 28,00 |
| 596 | 28,26 | 27,22 |

Par ailleurs, la figure 2 représente les variations de la concentration en monoperoxyphtalate de magnésium (MMPP) de cette poudre I en fonction du temps.

Ce test a permis de démontrer que les variations de cette concentration après un stockage de plus de 500 jours sont inférieures 10 %, ce qui correspond à un résultat satisfaisant.

On a vérifié cette stabilité en préparant un kilogramme de la poudre II ayant la composition suivante :
- monoperoxyphtalate de magnésium 30 %
- cumène sulfonate de sodium 7,50 %
- dodécylbenzènesulfonate de sodium 7,50 %
- acide borique 15 %
- bisulfate de sodium 15 %
- sulfate de sodium anhydre 25 %.

On a pris plusieurs échantillons de cette poudre II et on les a soumis à un stockage prolongé à température ambiante. On a mesuré les teneurs en monoperoxyphtalate de magnésium de ces échantillons après un stockage de 86, 242, 347 et 428 jours.

Les résultats obtenus sont rassemblés dans le tableau 7 ci-dessous :

**Tableau 7**

| ***Nb. Jours*** | ***0*** | ***86*** | ***242*** | ***347*** | ***428*** |
|---|---|---|---|---|---|
| | 29,91 | | | | |
| | 30,63 | 29,71 | 29,73 | 28,35 | 29,24 |
| ***TEMP. AMB.*** | 30,06 | 30,4 | 30,14 | 28,83 | 28,5 |
| | 30,68 | | | | 30,2 |
| | 31 | | | | |
| ***moyenne*** | 30,4456 | 30,055 | 29,935 | 28,59 | 29,31 |
| | | | | | |
| ***% dégradé*** | 0 | 1,32 | 1,71 | 6,13 | 3,75 |

Ce test a permis de constater qu'après 428 jours, le pourcentage de dégradation était inférieur à 10 %.

L'invention se rapporte également à une solution aqueuse désinfectante ayant une activité bactéricide et virucide marquée, renfermant entre 2 et 20 g/l de la composition susmentionnée. Le pH d'une telle solution est, en règle générale, compris entre 2 et 5.

Les exemples suivants permettent de mettre en lumière l'activité bactéricide et virucide remarquable des compositions désinfectantes conformes à l'invention.

### Exemple 1 :

Cet exemple a permis de mettre en évidence que l'association du monoperoxyphtalate de magnésium avec un acide : l'acide malique et un agent tensioactif anionique de type alkylbenzènesulfonate de sodium : le cumène sulfonate de sodium, conduit à l'obtention d'un effet de synergie particulièrement intéressant sur l'activité bactéricide, d'une part, et sur l'activité virucide, d'autre part.

Dans ce but on a préparé un mélange Ml renfermant en proportions pondérales 25 % de cumène sulfonate de sodium et 75 % d'acide malique.

On a analysé l'activité bactéricide des produits testés sur les deux souches bactériennes *Pseudomonas aeruginosa* (CIP A 22) et *Enteroccocus hirae* (CIP 58 55).

On a ainsi déterminé les concentrations minimales bactéricides (CMB), d'une part, de monoperoxyphtalate de magnésium (MMPP) et de mélange Ml seul et, d'autre part, de leur association, ce dans des solutions d'eau distillée, d'eau dure à 30°f et dans les conditions de saleté prévues par les normes correspondant aux exigences en matière d'homologation d'un désinfectant à usage agricole (matières organiques : albumine 1 % + extrait de levures 1 %).

Les concentrations minimales bactéricides (exprimées en ppm) ainsi déterminées sont rassemblées dans le tableau 8 ci-dessous :

**Tableau 8**

| | ***Pseudomonas aeruginosa A22*** | | | ***Enteroccocus hirae 5855*** | | |
|---|---|---|---|---|---|---|
| **Conditions testées** | **Eau distillée** | **Eau dure 30°F** | **Matière organique** | **Eau Distillée** | **Eau dure 30°F** | **Matière organique** |
| **Mélange M1 employé seul** | 1600 | 1600 | 3100 | 25000 | 25000 | 100000 |
| **MMPP seul** | 800 | 800 | 3000 | 800 | 800 | 3000 |
| **MMPP associé à M1** | 150 | 75 | 800 | 90 | 65 | 1000 |

Les résultats ainsi obtenus illustrent parfaitement l'effet de synergie apporté par le mélange Ml qui n'a que peu d'activité bactéricide lorsqu'il est utilisé seul (en particulier sur la bactérie *Enterococcus hirae).* En effet, lorsque le monoperoxyphtalate de magnésium est associé à l'acide malique et au cumène sulfonate de sodium, les concentrations minimales bactéricides sont diminuées de 3 à 12 fois.

En tenant compte des quantités de mélange Ml mi ses en jeu dans les associations on peut dresser le tableau 9 ci-dessous

**Tableau 9**

| | ***Pseudomonas aeruginosa*** | | | ***Enteroccocus hirae*** | | |
|---|---|---|---|---|---|---|
| | **Eau Distillée** | **Eau dure** | **Matière organique** | **Eau Distillée** | **Eau dure** | **Matière organique** |
| ***CMB (MMPP)*** + **CMB *(mélange)*** | 3400 | 3400 | 6100 | 25800 | 25800 | 103000 |
| ***CMB (MMPP + mélange)*** | 490 | 255 | 2000 | 1690 | 1465 | 6600 |
| ***Rapport de potentialisation*** | 6,9 | 13,3 | 3 | 15,3 | 17,6 | 15,6 |

Pour déterminer l'activité virucide de l'association susmentionnée, on a préparé différents mélanges monoperoxyphtalate de magnésium/cumène sulfonate de sodium/acide malique et on a analysé l'efficacité de ces différents mélanges sur le virus de la maladie de Talfan, ce en appliquant les conditions expérimentales qui correspondent aux exigences en matière d'homologation d'un désinfectant à usage agricole [temps de contact 30 min. - température 20°C - conditions de saleté : eau dure à 30°f + matières organiques (albumine 1 % + extrait de levure 1 %)].

Les chutes du titre viral (exprimé en Log) pour les différents mélanges testés sont rassemblées dans le tableau 10 ci-dessous :

### Tableau 10

**Tableau ①**

| **MMPP (ppm)** | - | - | - | 1000 | 1500 | 1500 | 1500 |
|---|---|---|---|---|---|---|---|
| Cumène sulfonate de sodium (ppm) | 1500 | - | 1500 | - | - | 1500 | - |
| Ac. Malique (ppm) | - | 3000 | 3000 | - | - | - | 3000 |
| Chute du titre viral (exprimé en Log) | 0 | 0,33 | 0 | 2,6 | 3,7 | 4,22 | 4,22 |

**Tableau ②**

| **MMPP (ppm)** | 1000 | 1000 | 1000 | 1000 | 1000 | 1000 |
|---|---|---|---|---|---|---|
| Cumène sulfonate de sodium (ppm) | 500 | 1000 | - | - | 500 | 1000 |
| Acide malique | - | - | 1000 | 2000 | 1000 | 2000 |
| Chute du titre viral (exprimé en Log) | 3,55 | 3,45 | 3,17 | 3,67 | 3,63 | 3,63 |

Les résultats comparatifs à 1 000 et 1 500 ppm de monoperoxyphtalate de magnésium révèlent une potentialisation de l'activité virucide intrinsèque de cette molécule ; en effet l'association de celle-ci avec le cumène sulfonate de sodium et/ou l'acide malique, permet d'obtenir la réduction du titre viral supérieure à 3 Log exigée par les normes pour obtenir une homologation pour une concentration de 1 000 ppm en monoperoxyphtalate de magnésium, rejoignant ainsi les doses efficaces en bactéricidie.

### Exemple 2 :

Les essais « d'orientation » selon l'exemple 1 ont été complétés par des essais réalisés sur l'ensemble des souches bactériennes et virales exigées dans le cadre d'une homologation et sur des mélanges renfermant des excipients complémentaires (agents de stabilisation et auxiliaires de fabrication).

Les souches bactériennes devant être prises en considération dans le cadre d'une homologation sont les suivantes : *Pseudomonas aeruginosa* (CIP A 22), *Escherichia coli* (CIP 54 127), *Staphylococcus aureus* (CIP 53 154) et *Enteroccocus hirae* (CIP 58 55).

Les virus à prendre en considération à cet effet sont, quant à eux, le virus de la maladie de Talfan et le virus de l'hépatite canine contagieuse (H.C.C.).

Selon cet exemple, on a préparé deux mélanges ayant la composition suivante en proportion pondérale :

### Mélange A :

- monoperoxyphtalate de magnésium 20 %
- acide malique 20 %
- cumène sulfonate de sodium 10 %
- sulfate de sodium anhydre 20 %

### Mélange B :

- monoperoxyphtalate de magnésium 30 %
- cumène sulfonate de sodium 7,50 %
- dodécyl benzènesulfonate de sodium 7,50 %
- acide borique 15 %
- bisulfate de sodium 15 %
- sulfate de sodium anhydre 25 %.

Il est à noter que la composition du mélange B correspond à celle de la poudre II testée lors de l'étude de la stabilité des mélanges conformes à l'invention.

Les concentrations à partir desquelles le monoperoxyphtalate de magnésium présent au sein du mélange A peut être considéré comme bactéricide conformément à la norme NF T 72 171, sont mentionnées dans le tableau 11 ci-dessous :

**Tableau 11**

| **Souches bactériennes** | ***Eau dure 30°f*** | ***Matières organiques*** |
|---|---|---|
| ***Staphylococcus aureus*** | 0,1 % (200 ppm) | > 0,75 % (> 1500 ppm) |
| ***Pseudomonas Aeruginosa*** | 0,05 % (100 ppm) | 0,5 % (1000 ppm) |
| ***Escherichia coli*** | 0,025 % (50 ppm) | 0,5 % (1000 ppm) |
| ***Enterococcus Hirae*** | 0,025 % (50 ppm) | 0,5 % (1000 ppm) |

Les concentrations à partir desquelles le monoperoxyphtalate de magnésium présent au sein du mélange A peut être considéré comme virucide, conformément à la norme NF T 72 181, sont mentionnées dans le tableau 12 ci-dessous

**Tableau 12**

| ***VIRUS*** | **Eau dure** | **Matières organiques** |
|---|---|---|
| **TALFAN** | 0,4 % (800 ppm) | 0,4 % (800 ppm) |
| **H.C.C.** | 0,4 % (800 ppm) | 0,75 % (1500 ppm) |

Les concentrations à partir desquelles le monoperoxyphtalate de magnésium présent au sein du mélange B peut être considéré comme bactéricide conformément à la norme NF T 72 171, sont mentionnées dans le tableau 13 ci-dessous :

**Tableau 13**

| | ***Eau dure 30°f*** | ***Matières organiques*** |
|---|---|---|
| ***Staphylococcus aureus*** | 0,05 % (150 ppm) | 0,75 % (2250 ppm) |
| ***Pseudomonas aerugi- nosa*** | 0,05 % (150 ppm) | 0,5 % (1500 ppm) |
| ***Escherichia Coli*** | 0,025 % (75 ppm) | 0,5 % (1500 ppm) |
| ***Enterococcus hirae*** | 0,1 % (300 ppm) | 0,25 % (750 ppm) |

Les concentrations à partir desquelles le monoperoxyphtalate de magnésium présent au sein du mélange B peut être considéré comme virucide conformément à la norme NF T 72 181, sont mentionnées dans le tableau 14 ci-dessous :

**Tableau 14**

| ***VIRUS*** | **Eau dure** | **Matières organiques** |
|---|---|---|
| **TALFAN** | 0,3 % (900 ppm) | 0,5 % (1500 ppm) |
| **H.C.C.** | 0,3 % (900 ppm) | 0,5% (1500 ppm) |

Il est à noter que le mélange B permet d'obtenir des résultats particulièrement avantageux tant en ce qui concerne l'activité bactéricide que l'activité virucide. La substitution de l'acide organique par un mélange d'acides minéraux a permis de maintenir la synergie de façon intéressante. De plus, l'acide borique et l'hydrogénosulfate de sodium ont été utilisés avantageusement en maintenant le pH des solutions d'emploi dans la fourchette désirée, ce sans accroître la corrosivité de la composition vis-à-vis des matériaux.

## Revendications

1. Composition désinfectante potentialisée et stabilisée en solution aqueuse et ayant une activité bactéricide et virucide marquée, spécialement adaptée au traitement de bâtiments d'élevage, en particulier pendant les périodes dites de « vide sanitaire » qui séparent chaque lot d'animaux ou encore au traitement de matériaux d'élevage,
**caractérisée en ce qu'**
elle est constituée par un mélange soluble dans l'eau, se présentant en particulier sous forme d'une poudre ou de comprimés et renfermant en proportion pondérale :
- 10 à 80 % d'un agent oxydant constitué par des sels de magnésium d'acides percarboxyliques et de préférence par du monoperoxyphtalate de magnésium,
- 5 à 30 % d'acide borique,
- 0,1 à 40 % d'au moins un agent tensioactif anionique, et
- le cas échéant jusqu'à 30 % d'agents de stabilisation, et/ou jusqu'à 40 % d'auxiliaires de fabrication
et en outre, au moins un acide organique choisi dans le groupe formé par les acides malique, citrique, succinique, tartrique, et sulfamique.

2. Composition selon la revendication 1,
**caractérisée en ce que**
le(s) agent(s) tensioactif(s) anionique(s) est (sont) choisi(s) dans le groupe formé par :
- les alkylsulfates primaires, en particulier le lauryl sulfate de sodium,
- les alkylsulfonates primaires et secondaires,
- les alkylarylsulfonates, en particulier le dodécylbenzène sulfonate de sodium et le méthyléthylbenzènesulfonate de sodium, et
- les alkyldiphényloxydodisulfonates de sodium,
ayant une chaîne alkyl comportant entre 8 et 22 et, de préférence entre 12 et 16 atomes de carbone.

3. Composition selon l'une quelconque des revendications 1 et 2,
**caractérisée en ce qu'**
elle renferme des carbonates et/ou bicarbonates.

4. Composition selon l'une quelconque des revendications 1 à 3,
**caractérisée en ce qu'**
elle renferme au moins un agent tampon constitué par du sulfate et/ou du bisulfate de sodium.

5. Composition selon l'une quelconque des revendications 1 à 4,
**caractérisée en ce qu'**
elle se présente sous la forme de comprimés renfermant, en proportion pondérale :
- 18 à 35 % de monoperoxyphtalate de magnésium,
- 20 à 37 % d'acide malique et/ou d'acide citrique,
- 2 à 15 % de cumène sulfonate de sodium,
- 12 à 25 % de bisulfate de sodium,
- 10 à 20 % de bicarbonate de sodium,
- 2 à 12 % d'acide borique, et
- 0,5 à 10 % de laurylsulfate de sodium.

6. Composition selon l'une quelconque des revendications 1 à 4,
**caractérisée en ce qu'**
elle se présente sous la forme d'une poudre renfermant, en proportion pondérale :
- 18 à 35 % de monoperoxyphtalate de magnésium,
- 5 à 25 % de cumène sulfonate et/ou de dodécylbenzènesulfonate de sodium,
- 12 à 25 % d'acide borique,
- 10 à 18 % de bisulfate de sodium, et
- 18 à 35 % de sulfate de sodium anhydre.

7. Solution aqueuse désinfectante ayant, une activité bactéricide et virucide marquée,
**caractérisée en ce qu'**
elle renferme entre 2 et 20 g/l de la composition selon l'une quelconque des revendications 1 à 6.

8. Solution aqueuse selon la revendication 7,
**caractérisée en ce que**
son pH est compris entre 2 et 5.

9. Utilisation d'une composition désinfectante potentialisée et stabilisée en solution aqueuse ayant une activité bactéricide et virucide marquée et constituée par un mélange soluble dans l'eau se présentant en particulier sous forme d'une poudre ou de comprimés et renfermant en proportion pondérale :
- 10 à 80 % d'un agent oxydant constitué par des sels de magnésium d'acides percarboxyliques et de préférence par du monoperoxyphtalate de magnésium,
- 5 à 30 % d'au moins d'acide borique,
- 0,1 à 40 % d'au moins un agent tensioactif anionique, et
- le cas échéant jusqu'à 30 % d'agents de stabilisation, et/ou jusqu'à 40 % d'auxiliaires de fabrication,
et en outre au moins un acide organique choisi dans le groupe formé par les acides malique, citrique, succinique, tartrique, et sulfamique,
pour le traitement de bâtiments d'élevage en particulier pendant les périodes dites de « vide sanitaire » qui séparent chaque lot d'animaux ou encore au traitement de matériaux d'élevage.

## Claims

1. Disinfectant composition which is potentiated and stabilised in an aqueous solution and which has a significant level of bactericidal and virucidal activity, and which is particularly suitable for treating livestock rearing premises, in particular during the periods referred to as "sanitary evacuation" periods which separate each batch of animals, or for processing livestock rearing materials,
**characterised in that**
it is constituted by a mixture which is soluble in water and which is in particular in the form of a powder or tablets and which comprises, in proportion by weight:
- from 10 to 80% of an oxidising agent constituted by percarboxylic acid magnesium salts and preferably by magnesium monoperoxyphthalate,
- from 5 to 30% of boric acid,
- from 0.1 to 40% of at least one anionic surfactant agent and,
- if necessary, up to 30% of stabilising agents and/or up to 40% of production aids,
and, furthermore, at least one organic acid selected from the group formed by malic, citric, succinic, tartaric and sulphamic acids.

2. Composition according to claim 1,
**characterised in that**
the anionic surfactant agent(s) is/are selected from the group formed by:
- primary alkyl sulphates, in particular sodium lauryl sulphate,
- primary and secondary alkyl sulphonates,
- alkylaryl sulphonates, in particular sodium dodecylbenzene sulphonate and sodium methyl ethyl benzene sulphonate, and
- sodium alkyldiphenyl oxide disulphonates,
having an alkyl chain comprising between 8 and 22, and preferably between 12 and 16 atoms of carbon.

3. Composition according to either claim 1 or claim 2, **characterised in that**
it comprises carbonates and/or bicarbonates.

4. Composition according to any one of claims 1 to 3,
**characterised in that**
it comprises at least one buffering agent which is constituted by sodium sulphate and/or sodium bisulphate.

5. Composition according to any one of claims 1 to 4,
**characterised in that**
it is in the form of tablets comprising, in proportion by weight:
- from 18 to 35% of magnesium monoperoxyphthalate,
- from 20 to 37% of malic acid and/or citric acid,
- from 2 to 15% of sodium cumene sulphonate,
- from 12 to 25% of sodium bisulphate,
- from 10 to 20% of sodium bicarbonate,
- from 2 to 12% of boric acid, and
- from 0.5 to 10% of sodium lauryl sulphate.

6. Composition according to any one of claims 1 to 4,
**characterised in that**
it is in the form of a powder which comprises, in proportion by weight:
- from 18 to 35% of magnesium monoperoxyphthalate,
- from 5 to 25% of sodium cumene sulphonate and/or sodium dodecylbenzene sulphonate,
- from 12 to 25% of boric acid,
- from 10 to 18% of sodium bisulphate, and
- from 18 to 35% of anhydrous sodium sulphate.

7. Disinfectant aqueous solution having a significant level of bactericidal and virucidal activity,
**characterised in that**
it comprises between 2 and 20 g/l of the composition according to any one of claims 1 to 6.

8. Aqueous solution according to claim 7,
**characterised in that**
the pH thereof is between 2 and 5.

9. Use of a disinfectant composition which is potentiated and stabilised in an aqueous solution and which has a significant level of bactericidal and virucidal activity, and which is constituted by a mixture which is soluble in water and which is in particular in the form of a powder or tablets and which comprises, in proportion by weight:
- from 10 to 80% of an oxidising agent constituted by percarboxylic acid magnesium salts and preferably by magnesium monoperoxyphthalate,
- from 5 to 30% of boric acid,
- from 0.1 to 40% of at least one anionic surfactant agent and,
- if necessary, up to 30% of stabilising agents and/or up to 40% of production aids,
and, furthermore, at least one organic acid selected from the group formed by malic, citric, succinic, tartaric and sulphamic acids,
for the treatment of livestock rearing premises, in particular during the periods referred to as "sanitary evacuation" periods which separate each batch of animals, or for processing livestock rearing materials.

## Patentansprüche

1. Potenzierte und in wässriger Lösung stabilisierte Desinfektionszusammensetzung mit deutlicher bakterizider und virizider Wirkung, besonders geeignet für die Behandlung von Viehzuchtgebäuden, insbesondere während Zeitperioden, die als "Reinigungsphase" bezeichnet werden und jeweils zwei Tiergruppen voneinander trennen, oder auch für die Behandlung von Zuchtmaterialien,
**dadurch gekennzeichnet, dass**
sie durch eine in Wasser lösliche Mischung gebildet wird, die insbesondere in der Form eines Pulvers oder von Tabletten vorliegt und nach Gewichtsverhältnis umfasst:
- 10 bis 80 % eines Oxidationsmittels, welches durch Magnesiumsalze von Percarbonsäuren und vorzugsweise durch Magnesium-Monoperoxyphtalat gebildet wird,
- 5 bis 30 % Borsäure,
- mindestens 0,1 bis 40 % eines anionischen oberflächenaktiven Stoffs und
- gegebenenfalls bis zu 30 % Stabilisatoren, und/oder bis zu 40 % Produktionshilfsstoffe und darüber hinaus, mindestens eine organische Säure ausgewählt aus der Gruppe bestehend aus Äpfelsäure, Zitronensäure, Bernsteinsäure, Weinsäure und Sulfaminsäure.

2. Zusammensetzung nach Anspruch 1,
**dadurch gekennzeichnet, dass**
der/die anionische(n) oberflächenaktive(n) Wirkstoff(e) ausgewählt ist/sind aus der Gruppe bestehend aus:
- den primären Alkylsulfaten, insbesondere Natriumlaurylsulfat,
- den primären und sekundären Alkylsulfonaten,
- den Alkylarylsulfonaten, insbesondere dem Natrium-Dodecylbenzolsulfonat und dem Natrium-Methylethylbenzolsulfonat und
- den Natrium-Alkyldiphenyloxydodisulfonaten,
mit einer Alkylkette umfassend zwischen 8 und 22 und vorzugsweise zwischen 12 und 16 Kohlenstoffatomen.

3. Zusammensetzung nach einem der Ansprüche 1 und 2,
**dadurch gekennzeichnet, dass**
sie Karbonate und/oder Bikarbonate umfasst.

4. Zusammensetzung nach einem der Ansprüche 1 bis 3,
**dadurch gekennzeichnet, dass**
sie mindestens ein Puffermittel umfasst, welches durch Natriumsulfat und/oder Natriumbisulfat gebildet wird.

5. Zusammensetzung nach einem der Ansprüche 1 bis 4,
**dadurch gekennzeichnet, dass**
sie in Form von Tabletten vorliegt, welche nach Gewichtsverhältnis umfassen:
- 18 bis 35 % Magnesium-Monoperoxyphtalat,
- 20 bis 37 % Äpfelsäure und/oder Zitronensäure,
- 2 bis 15 % Natrium-Cumolsulfonat,
- 12 bis 25 % Natriumbisulfat,
- 10 bis 20 % Natriumbikarbonat,
- 2 bis 12 % Borsäure und
- 0,5 bis 10 % Natriumlaurylsulfat.

6. Zusammensetzung nach einem der Ansprüche 1 bis 4,
**dadurch gekennzeichnet, dass**
sie in Form eines Pulvers vorliegt, welches nach Gewichtsverhältnis umfasst:
- 18 bis 35 % Magnesium-Monoperoxyphtalat,
- 5 bis 25 % Natrium-Cumolsulfonat und/oder -Dodecylbenzensulfonat,
- 12 bis 25 % Borsäure,
- 10 bis 18 % Natriumbisulfat und
- 18 bis 35 % Natriumsulfat-Anhydrid.

7. Wässrige Desinfektionslösung mit deutlicher bakterizider und virizider Wirkung,
**dadurch gekennzeichnet, dass**
sie zwischen 2 und 20 g/l der Zusammensetzung nach einem der Ansprüche 1 bis 6 umfasst.

8. Wässrige Lösung nach Anspruch 7,
**dadurch gekennzeichnet, dass**
ihr pH-Wert zwischen 2 und 5 liegt.

9. Verwendung einer potenzierten und in wässriger Lösung stabilisierten Desinfektionszusammensetzung mit deutlicher bakterizider und virizider Wirkung, die durch eine in Wasser lösliche Mischung gebildet wird, welche insbesondere in der Form eines Pulvers oder von Tabletten vorliegt und nach Gewichtsverhältnis umfasst :
- 10 bis 80 % eines Oxidationsmittels, welches durch Magnesiumsalze von Percarbonsäuren und vorzugsweise durch Magnesium-Monoperoxyphtalat gebildet wird,
- mindestens 5 bis 30 % Borsäure,
- mindestens 0,1 bis 40 % eines anionischen oberflächenaktiven Stoffs, und
- gegebenenfalls bis zu 30 % Stabilisatoren, und/oder bis zu 40 % Produktionshilfsstoffe,
und darüber hinaus mindestens eine organische Säure ausgewählt aus der Gruppe bestehend aus Äpfelsäure, Zitronensäure, Bernsteinsäure, Weinsäure und Sulfaminsäure,
für die Behandlung von Viehzuchtgebäuden, insbesondere während Zeitperioden, die als "Reinigungsphase" bezeichnet werden und jeweils zwei Tiergruppen voneinander trennen, oder auch für die Behandlung von Zuchtmaterialien.
